# EUROPEAN PATENT APPLICATION

(11) **EP 4 786 088 A2**
(43) Date of publication of application: **05.08.2026**
(21) Application number: 26161702.1
(22) Date of filing: 21.03.2018
(51) Int. Cl.: B23K 26/00

(54) **A MACHINE TOOL**

(30) Priority: 22.03.2017 GB 201704565
(62) Divisional of application: 18715076.8
(71) Applicant: Hybrid Manufacturing Technologies Limited, Leicestershire DE12 6EJ (GB)
(72) Inventor: Jones, Jason, Leicestershire, DE12 6EJ (GB); Coates, Peter, Leicestershire, DE12 6EJ (GB); Solomon, Peter-Jon, Leicestershire, DE12 6EJ (GB); Zadroga, Joshua, Leicestershire, DE12 6EJ (GB)
(74) Representative: Barker Brettell LLP

(57) **Abstract**

A machine tool is arranged to deliver at least one of an energy source and a media, through a processing head onto a work-piece for material addition, inspection or data collection, wherein the machine-tool has a clamping mechanism arranged to temporarily receive the processing-head and wherein the machine tool comprises a stop block having a manifold arranged to deliver at least one of the energy and media and wherein the processing head comprises an anti-rotation arm and connector arranged to be connectable to the stop block and wherein the processing head further comprises a manifold arranged to engage with the stop block manifold when the processing head is connected to receive the energy or media.

The machine tool may be a multi-axis machine tool and the stop block can be fixed to the machine tool or may be integrated therein.

The disclosed invention also relates to a method of connecting a processing head to a machine tool.

## Description

### Field of the invention

This invention relates to a machine tool, or other type of machine, arranged to deliver at least one of an energy source and media through a processing head onto a work-piece. The machine tool may in particular, but not exclusively be referred to as a hybrid machine tool. In particular, but not exclusively, the invention may relate to an apparatus and to a method of carrying out hybrid manufacturing using the apparatus.

Hybrid manufacturing is a term used in relation to a method of manufacturing that involves both additive manufacturing and CNC machining in combination.

### Background of the invention

In the past machine tools have been used to remove material from a work piece through what is termed machining and such machine tools have included milling machines and the like which are often computer controlled or Computer Numerically Controlled (CNC).

As described in previous applications filed by the inventors, such as WO2014/013247 and WO2015/189600 conventional CNC milling machines, which may be referred to as "machine tools" are equipped only for subtractive material removal operations such as milling, drilling, grinding, broaching etc. CNC milling machines may also be able to carry out some types of measurement such as topical measurement using a contact touch probe or non-contact scanners.

As technology develops it is now possible to use such machines to perform other functions, such as other forms of material removal (ultra-sonic, laser and the like), welding and material deposition (such as laser deposition, hard facing, directed energy deposition, additive manufacturing, etc.).

Additive manufacturing is a technology in which articles or at least portions thereof are manufactured, modified or repaired by adding material. Additive manufacturing has typically been carried out by a stand-alone 3D printer. In other cases additive manufacturing has been carried out by a dedicated additive manufacturing system or using deposition by a robot, machine tool, assembly lines or similar.

The inventors have appreciated that additive manufacturing techniques can be applied within the machine-tool environment to great benefit.

A combination of additive manufacturing techniques and conventional subtractive manufacturing techniques has become known as hybrid manufacturing.

It is known to provide arrangements that provide processing heads that can be fitted to existing machine-tools, such as multi-axis CNC milling machines. However such prior art processing-heads are not convenient as may be desired.

The retrofit of additive manufacturing techniques to machine tools has facilitated the introduction of "hybrid manufacturing." As described in WO2014/013247 and WO2015/189600, a variety of energy sources suitable to enable additive manufacturing may be integrated into a machine tool. A common energy source is a laser, as illustrated in a preferred embodiment of WO2014/013247. As described in WO2014/013247, the delivery of the laser energy and feedstock media was enabled by the invention of a dockable manifold to delivery energy or media and a corresponding manifold on the processing head to receive the energy and/or media. The preferred embodiment of WO2014/013247 is ideal for a variety of process methods, especially to provide line of sight laser energy delivery.

It has been appreciated that the described dockable manifold and corresponding manifold on the processing head are complex and expensive components. The effort required to install such a docking system is justifiable for laser-based directed energy deposition for high value parts, typically made from metal, but it has been appreciated that the cost of such components may not be justified for use with some combinations of processing heads including certain types of inspection heads and other types of additive manufacturing techniques.

WO2015127272 discloses methods and apparatus for performing additive manufacturing processes using a machine tool and may include controlling an orientation of a processing head to control the tangential angle of a fabrication energy beam, a feed powder nozzle, or both. The orientation of a non-circular energy beam may be control to more evenly distribute the energy beam across a width of a tool path. Additionally or alternatively, the orientation of the feed powder nozzle may be controlled to project toward a powder target that is spaced from a beam target.

US9 446 475 discloses a system for use in ultrasonic additive manufacturing processes, comprising a milling machine or the like and a weld assembly. The milling machine further includes a spindle adapted to receive a milling tool, wherein the spindle is capable of moving in the z-axis direction; and a table positioned beneath the spindle, wherein the table is capable of moving in the x-axis direction and the y-axis direction. The weld assembly is adapted to be mounted on the spindle of the milling machine and further includes an ultrasonic weld head; a tapered tool shank adapted to connect the weld assembly to the spindle; and a unique mating collar disposed between the ultrasonic weld head and the spindle, wherein the mating collar is operative transfer thrust loads associated with ultrasonic additive manufacturing processes from the ultrasonic weld head to the z-axis of the spindle without damaging the spindle or other components of the machine.

### Summary of the invention

According to a first aspect of the invention there is provided a machine tool arranged to deliver at least one of an energy source and a media, through a processing head onto a work-piece for material addition, inspection or data collection, wherein the machine-tool has a clamping mechanism arranged to temporarily receive the processing-head and wherein the machine tool comprises a stop block having a manifold arranged to deliver at least one of the energy and media and wherein the processing head comprises an anti-rotation arm and connector arranged to be connectable to the stop block and wherein the processing head further comprises a manifold arranged to engage with the stop block manifold when the processing head is connected and to receive the media.

In a preferred embodiment the machine tool is a multi-axis machine tool.

Preferably the media or energy is conducted from the processing head manifold into the processing head. Desirably the media or energy is applied to the work piece by the processing head. In a preferred embodiment the media or energy is applied to the workpiece by a processing component of the processing head. Preferably the processing component is adjacent to the workpiece. The processing component may comprise an application head or may comprise an application point.

Desirably the machine stop block is fixed to the machine and desirably is not moveable. In a preferred embodiment the fixed stop block is arranged with a manifold located on or near the spindle. In an alternative embodiment the stop block features are integrated into the machine tool. In some examples, the stop block may be integrated in the machine tool's spindle, spindle housing, Z-axis casting or other structure, thus providing a means to use processing heads with anti-rotation arms and or connectors. The spindle may include an outer part of the spindle body which does not rotate in use. Spindle housing may include a cover or other part enclosing the spindle. In other embodiments the stop block may be integrated into a casing or sheet metal cover enclosing or at least partially surrounding the spindle.

The use of stop blocks on CNC machines is known. Typically such stop blocks have been used when it is desirable to prevent the outer housing or the entire processing or milling head from moving, particularly preventing rotational movement of a portion of the processing head.

In known stop blocks a block is provided on the machine and comprises at least an aperture arranged to receive an anti-rotation arm extending from the processing head. The anti-rotation arm may comprise a stop arm and may further comprise a plunger or alternative mechanical extension. The plunger may be formed of a solid material such as steel and may be dimensioned such that the plunger can resist any rotational movement and forces applied to the plunger.

The stop block manifold may be arranged to cooperate and mate with the manifold on the processing head. The stop block manifold may be provided around the aperture of the block. The manifold on the processing head may be provided in the stop arm or plunger. In other embodiments the manifold may be provided adjacent to the plunger.

The machine tool may be arranged to process a work-piece.

Typically a clamping mechanism is housed in the nose of the spindle and arranged to claim the processing head in place on the spindle. Further, the machine tool typically has an axis passing through the processing head when connected to the clamping mechanism and about which the processing-head is arranged to move.

The processing-head may comprise one or more guiding mechanisms arranged to direct the energy source onto a work-piece.

The docking-manifold may be arranged to have connected thereto one or more media to be, in use, supplied to the processing-head to facilitate processing of the work-piece.

The docking-manifold may allow the one or more media to be supplied to the processing-head when the processing-head is connected to the clamping mechanism and the anti-rotation arm is connected to the stop block.

Conveniently, the machine-tool also comprises at least one mechanism arranged to move a supply docking-manifold into and/or out of connection with the processing-head docking-manifold such that when the stop block manifold and the processing head manifold are connected the, or each, media is supplied to the processing head. In the preferred embodiment the motion of loading a tool into the clamp in the nose of the spindle will also place the manifolds into communication with one another, although this may also be actuated in part or full as one or more additional steps.

Additional steps or "multi-stage docking" allows the use of connectors that require alignment with greater precision than the positioning of the manifold interfaces using the anti-rotation arm or other convenient alignment method such as a robot or gantry. Examples of such connectors that would benefit by this approach include electrical connectors or water fittings that de-couple or gas connectors. It may also accommodate the moving or removal of a protective covering that keeps chips, swarf, oil, cutting fluid and other contaminants away from compromising the manifold connectors, such as electrical interfaces for example. Once an initial mechanical interface between the anti-rotation arm plunger entering into the stop block dock, additional stages can be actuated by any convenient energy supply including but not limited to mechanical, pneumatic, or electrical actuation. In alternative embodiments such as for use with a robotic arm, it may be desirable to have multiple stages such that portions of the manifolds engage at different times or sequences.

The docking-manifolds may be arranged to allow an energy source to be transmitted into the processing-head.

Generally embodiments allow the energy source to be transmitted through the processing-head docking-manifold once the two manifolds are connected. Such embodiments are convenient in that they allow the energy source to be connected as the manifolds are brought together.

Embodiments may have ducts within the stop block docking-manifold arranged to supply at least one of a cooling-medium arranged to cool the or each guiding mechanism within the processing-head, a processable medium arranged to be processed, in use, by the energy source and a shielding medium. Conveniently, each of cooling, shielding and processable media may simply be referred to as media. Again, such embodiments are convenient since they allow the, or each, media to be conveniently supplied, in use, once the manifolds are connected.

It will be appreciated by those skilled in the art that it is desirable to provide an inert environment when exposing selected materials to energy and/or temperature. This can be done via delivery of shielding gas (i.e. a shielding medium) locally such as through the processing head. Alternatively, this activity can be undertaken inside a chamber provided around the machine tool, or at least a part of the machine tool, which maintains a vacuum or alternative inert environment.

It will be appreciated that the stop block docking manifold may be arranged to supply a plurality of media and/or energy supplies.

Many embodiments provide an alignment mechanism arranged to align at least one of the medium supplies and the energy source with the ducts within the processing-head docking manifold. It will be appreciated that energy sources often need to accurately aligned in order that they are focussed, in use, correctly and providing an alignment mechanism ensures that an energy source that is connected as the two manifolds connect is correctly aligned. In a preferred embodiment the orientation of dock located on or within an anti-rotation arm is achieved by use of a pin extending from the plunger and clocking ring which maintain its angular orientation when the plunger is not connected to the stop block as known in the art.

A processing head may have two or more anti-rotation arms. The stop block may extend around a portion of the machine tool, such that two or more anti-rotation arms can engage a single stop block. Alternatively, separate stop blocks may be provided for one or more anti-rotation arms. The arms may be spaced at any intervals around the processing head. For example, two arms may be spaced by 180 degrees. Alternatively two arms may be desired at closer intervals so that they may be compact enough to enter the tool magazine. One or more of the stop blocks may include a manifold connectable to a manifold of the processing head.

In some embodiments, the alignment mechanism is provided, at least in part, by a substantially planar surface.

Typically, embodiments are arranged, to guide energy delivered to the processing head and to, to focus the energy source onto a region in line with a longitudinal axis of the processing head in use. Such an arrangement is convenient in that it can make the machine-tool easier to program, since there is no need to take account of offset in multiple axes, and smaller since the working area does not need to account for an offset. The skilled person will understand that as the focus of the energy source is offset from the axis then the working area required to process an object increases significantly since further translations are required to account for the offset.

Embodiments of the machine tool with a stop block manifold may be arranged to provide the energy source as at least one of the following: electricity, signalling, heat, electron beam, arc, plasma, microwaves, masers, focused electromagnetic radiation, or sound waves (including ultrasound), or the like. The electromagnetic radiation may for example be any of the following: x-rays, microwaves, ultraviolet light, infrared radiation, or the like.

The guiding mechanism provided within the stop block manifold and/or the processing head manifold or processing head may comprise any of the following: one or more lenses, mirrors, prisms, diffraction gratings, beam expanders, spatial light modulators, optics, electrical coupling mechanism, conductive media paths, induction coupling mechanism, beam steering components, beam steering field generators, micro-electromechanical systems, micro-mirror devices, shielding components such as Electro Magnetic Interference (EMI) shielding including co-axial cable, or the like. However, it is convenient if the processing-head comprises more robust and fewer components.

In particular, the processing-head, in some embodiments, may comprise a lens and a reflector.

The machine tool may, in use, be arranged to supply at least one of the following: a metal, polymer, or ceramic material typically in powder or filament form; cooling or processing fluids; gases; processing fluid, or the like.

Conveniently, a controller of the machine-tool is arranged to cause the machine-tool to change the processing-head within the clamping mechanism automatically, or at least semiautomatically. The skilled person will appreciate that the term controller of the machine tool is arranged to cover both controllers internal of the machine tool and those networked or otherwise coupled to the machine tool.

It will be appreciated that control of the processing head to connect the anti-rotation arm to the stop block by means of the arm and typically by means of a plunger received in the stop block is well known and will not be further described here.

It will be appreciated that the term "machine tool" has been used in relation to the machine as a whole. Interchangeable heads have been described and conventional milling and machining heads, sometimes referred to as machining cutters or tools, have been referred to a machining heads. As disclosed in this application alternative heads, termed "processing heads" are used to process a work piece which may involve the direction of energy to a work piece or the direction of media and energy to a work piece or the application/deposition of media on a work piece.

The skilled person will appreciate that there are several forms of known stop blocks and anti-rotation arms which may be adapted to provide the claimed invention.

In some embodiments the stop block dock may have a plurality of manifolds. Some of the manifolds may be fixed. In other embodiments one or more of the manifolds may be moving.

Each manifold may be selected from a wide range and combination of connectors. The manifold may comprise electrical connectors for signal voltage, sensor feedback, power supplies and current carrying capacity. In some embodiments the manifold may comprise means of applying a high voltage to the workpiece. For example the manifold may supply a high voltage so that the processing head can utilise a welding arc for processing the work piece.

The manifold may also comprise one or more media delivery tubes or lines and that media may be selected from gases; liquids; vapours; mists; aerosols.

In other embodiments the media may be selected from solid forms such as powder, wire, pellet, foil and solid forms of feedstock material.

Assisting media may also be supplied to the workpiece though the stop block manifold and the processing head manifold and such media may comprise water and air fittings arranged in use to cool, shield or modulate the process.

Additional modifications may be made to the processing head and the docking manifolds. In one embodiment the anti-rotation arm further comprises an orientation collar arranged to at least partially encircle the processing head. Desirably the orientation collar comprises a cooling mechanism.

In another embodiment the processing head comprises a collar. Optionally the collar comprises a cradle arranged to preheat a polymer extrusion head.

It has been appreciated that a machine tool in accordance with the invention and having an encircling collar (which may be the same as a clocking ring or collar used for maintaining orientation of the head when the plunger is not engaged in the stop block as known in the art) may be designed with features for providing cooling to the heads or work piece by means of circulating or pumping air. Additionally channels carrying gas or liquid for cooling or shielding during process printing are also a desired feature which may be provided in the collar.

A particular advantage of using this dock for material deposition in a CNC machine is that it opens up the possibility for hybrid processing. For example, instead of requiring a heated bed for adhering initial layers onto a substrate, groove or holes may be made in a substrate by a CNC machine using milling or drilling cutters. Following the formation of a groove or grooves or holes the processing head with a deposition system can inject material into the voids achieving a mechanical bond of the new deposit to the substrate with sufficient strength to allow the rest of the build or to continue and even post-deposition machining of the newly deposited work piece surfaces with only minimal or in some cases without additional any additional work holding devices. In this latter sense, the work holding is printed in as needed.

It will be appreciated that due to the hybrid nature of a CNC machine equipped with a dock, the ability to deposit material and mill in the same envelop affords new permutations of work piece processing. In some methods the hybrid CNC machine may be used for wire embedding which may be conveniently achieved by depositing material forming a work piece or portion thereof. Optionally a dovetail cutter or another type of cutter can mill a channel into which wire can be placed or snapped in (depending on the stiffness of the material and tolerances with respect to the wire thickness). In some embodiments the wire can be fed in through the dock. Alternatively or where straightness is paramount it may be fed co-axially through hollow centre of a spindle.

Feeding wire or other suitable feedstock or assist media through the spindle provides a distance over the spindle in which to straighten the wire or other feedstock. Desirably the feedstock approaches the work piece normal to the surface.

In some embodiments the energy may be delivered to the processing head through the supply dock on the stop block. In some embodiments a feedstock may be delivered to the processing head from a different location and direction such as the wire example given above. This can be advantageous for deposition heads where it is convenient for the energy to enter through the stop block dock and the media may be desired to enter from another direction and for the energy and feedstock to intersect only as the feedstock approaches the work piece.

In an embodiment, the processing head may comprise a second anti-rotation arm. The machine tool may also comprise a second stop block arranged to engage the second anti-rotation arm.

According to a second aspect of the invention there is provided a kit comprising a processing-head having an anti-rotation arm and a manifold in combination with a stop block having a docking-manifold wherein the processing-head is arranged, in use, to be connectable to a clamping mechanism of a machine tool, or the like.

In some embodiments that processing head docking manifold may be arranged to have connected thereto one or more media, in use, to be supplied to the processing head to facilitate processing of the work-piece.

In some embodiments the processing head anti-rotation arm is connectable to the stop block by means of a plunger extending from the stop arm and receivable in an aperture in the stop block.

In some embodiments the stop block docking-manifold may be arranged to allow an energy source to be transmitted into the processing-head manifold and preferably through the processing head to be applied to the workpiece.

Embodiments may typically provide the processing-head docking-manifold with ducts therein arranged to supply at least one of a cooling-medium arranged to cool the or each guiding mechanism within the processing-head and an energy source processable medium arranged to be processed, in use, by the energy source. Other fluids and/or media as described herein may also be communicated between the two manifolds.

In some embodiments, further guiding mechanisms may be provided in addition to the guiding mechanism within the processing-head, which may be associated with the supply stop block docking-manifold.

At least some embodiments of the invention may arrange at least one of the energy guiding mechanism(s) such that the energy source processable medium can be selectively melted within the processing head.

In alternative, or additional embodiments, the kit may comprise a plurality of processing heads each of which is arranged to focus the energy source differently to other processing-heads within the kit. For example, a first processing-head may be arranged to melt the energy source processable medium within the processing head. A second processing head may be arranged to supply a media for laying down on the workpiece. Other processing heads may be arranged to carry out other additive or subtractive processes or to measure or scan the workpiece.

A range of heads may be used with this novel docking approach. Typically the processing heads may be used for material deposition, manipulation or inspection. Additive manufacturing for use with this dockable manifold include any of the known seven families of additive manufacturing as standardised by STM F42. It will be appreciated that the novel docking approach can be readily adapted for use with additional; types of processing head. It is anticipated the novel docking system may include inspection heads such as eddy current inspection, ultra sound inspection, laser scanning, 3D scanning, photogrammetry, optical measurement, hardness measurement, microscopy, cameras, magnetic, capacitive sensors, and the like.

As previously mentioned, in a preferred embodiment the orientation of a dock located on or within an anti-rotation arm is achieved by use of a pin extending from the plunger and clocking ring which maintain its angular orientation when the plunger is not connected to the stop block as known in the art. When the processing head is loaded into the spindle it is maintained in approximate alignment and as the plunger engages with the stop block it achieves its final alignment. Conveniently for some media types an alignment mechanism arranged to align medium supplies within the supply docking-manifold with ducts within the processing-head docking manifold. This may be necessary for decoupled liquid fittings and other media or energy fittings.

According to a third aspect of the invention there is provided a method of connecting a processing-head to a machine tool wherein the processing head has an anti-rotation arm and connector and a manifold, the method comprising:
a) providing a machine tool with a stop block dock having a supply manifold;
b) causing the machine tool to select the processing-head from a storage location and insert the processing-head into a clamping mechanism of the machine-tool; and
c) moving the anti-rotation arm and connector to engage with the stop block;
d) moving the processing head manifold into connection with the stop block supply docking-manifold;
e) wherein connection of the supply stop block docking-manifold and the processing-head docking-manifold provides a supply of one or more media to the processing-head such that, in use, the or each media can be supplied.

The method may additionally comprise the process in reverse to replace the processing head within a storage area of the machine tool.

In some embodiments, the steps of moving the anti-rotation arm and connector to engage with the stop block and moving the processing head manifold into connection with the stop block supply docking-manifold may occur at the same time.

In some embodiments there may also be provided connections for electrical, optical and mechanical connections between the processing head manifold and the stop block docking manifold and the machine tool. Such connections provide connections for process monitoring sensors and equipment. Such sensors may comprise image recording apparatus, lighting, touch probes, 3D surface and volumetric scanners, sensors such as oxygen sensors and thermal sensors or cameras and the like. In some embodiments the temperature sensor may be used to monitor a temperature of the work piece on which processing is being carried out. The process monitoring sensors or measuring equipment may comprise part of the processing head, part of a manifold arranged to have connected thereto one or more media and/or be in addition to both the processing head and the manifold. For example, some embodiments may provide process monitoring sensors as a separate head, which may be thought of as an inspection head, in addition to any processing heads and machining heads.

In some embodiments the temperature of one or more melt pools may be monitored. A melt pool may be formed where material is deposited. The media may be applied to or toward the work piece and melted by the application of energy from an energy source. Thus, the media may be thought of as being an energy source processable medium.

In additional, or alternative, embodiments, the media may be deposited in a molten state.

In some embodiments one media is supplied to the processing head. In other embodiments two or more media may be supplied to the processing head. The media may for example comprise alternative colours or alternative media. In some embodiments a first media may comprise a building material and a second media may comprise a support material. The support material may be removable once the work piece is completed. Should a plurality of media be provided then the tool may be arranged to be able to selectively use those media.

In some embodiments the media may comprise a polymer material. In other embodiments the media may be selected from a group comprising metals, non-metals, polymers, ceramics, clay or dielectric materials. The media may be provided in any of the following forms: in powder or pellet form; filaments, rods, foils, plate or wires, in semi- to fully liquid form. Alternatively media can be provided as, or in suspension in, a liquid, emulsion, gas, aerosol, slurry or paste.

In one particular embodiment the media may comprise a polymer filament. Typically such a filament may be heated by the energy source to a temperature such that the media can be fed, directed, extruded, jetted or otherwise deposited in a controllable manner. Alternatively a fluid media may be supplied to the processing head from the media reservoir. The media may be heated by the energy source till all the media in the reservoir is fluid and can be dispensed, or otherwise expelled, in a controllable manner. In some embodiments the media may also comprise conductive, semi-conductive, and dielectric material such that electric circuits can be laid down during formation of the workpiece. In an alternative embodiment the media may pass from the reservoir towards a deposition tip of the processing head and the energy may be applied to the media prior to the media leaving the deposition tip. This may be particularly suitable for embodiments in which the media is in the form of a filament or wire and the media can be fed through the processing head by mechanical feeding mechanism such as by rollers. It may be desirable for the media to be relatively stiff until the media is about to be deposited. The energy may be applied just before the media leaves the deposition tip or as or after the media leaves the deposition tip. Alternatively, or additionally, the material may be deposited onto the surface of the work piece and then exposed to the energy.

According to another aspect of the invention there is provided a processing head for a machine tool, comprising a body portion intermediate a clamping component and an application component, the body portion having an anti-rotation arm connected to the body portion and a docking manifold on the anti-rotation arm, the docking manifold being adapted and arranged in use to connect to a supply manifold on the machine tool and the docking manifold being arranged to supply at least one of an energy supply and/or a media supply from the supply manifold to the processing head before being applied to a workpiece.

The processing head may have a cooled tamping platen which reciprocates or vibrates against material as it is deposited. The processing head may have a platen for compacting the material which uses a rocking motion.

According to a further aspect, there is provided a docking interface between a processing head and a support structure, wherein the docking interface is arranged to deliver at least one of an energy source and a media through the processing head for additive manufacturing or inspection, wherein the support structure includes:
a supply manifold arranged to deliver at least one of the energy and media;
a clamping mechanism arranged to receive the processing-head; and
a first engagement portion;

wherein the processing head is receivable in the clamping mechanism and includes:
   a processing head manifold arranged to receive at least one of the energy and media from the supply manifold; and
   a second engagement portion arranged to releasably engage the first engagement portion,
and wherein an initial motion aligns the first engagement portion and the second engagement portion, and an additional motion enables fluid communication between the supply manifold and the processing head manifold.

The first engagement portion may be a part of the supply manifold. The second engagement portion may be a part of the processing head manifold.

The clamping mechanism may comprise a mechanical receiving portion arranged to receive at least a portion of the processing head manifold.

Once the first engagement portion is engaged with the second engagement portion which in some cases is by mechanical motion the additional motion may provide a further connection between the processing head manifold and the supply manifold.

The support structure may be a machine tool or a robot or a combination of the two. The processing head may be arranged to carry out at least one of additive manufacturing or Computer Numerically Controlled (CNC) machining or inspection on a workpiece.

The fluid communication may be through at least one connector.

An additional movement may be actuated by an energy supply.

The supply manifold and the processing head manifold may be connected in a multistage docking procedure.

The additional movement may comprise a fine movement of the processing head manifold relative to the supply head manifold.

The connector may comprise an electrical connector, gas connector, or a water connector.

Additional steps or "multi-stage docking" allows the use of connectors that require alignment with greater precision than the positioning of the manifold interfaces using a simple engagement mechanism. Multi-stage docking further allows the use of connectors that may be damaged during the forces or misalignment experienced during docking. Once the initial mechanical interface between the engagement portions has been established, additional stages can be actuated by any convenient energy supply including but not limited to pneumatic or electrical actuation.

A cover for avoiding contamination of the or each manifold may be opened or removed while the manifolds are fully coupled. This helps to keep chips, swarf, oil, cutting fluid and other contaminants away from compromising the manifold connectors, such as electrical interfaces, water or gas connectors for example.

It will be appreciated that the cover may be used connection with any of the aforementioned embodiments. The cover may be particularly desirable in embodiments in which there are delicate connectors that otherwise would not survive exposure to would-be contaminants in the processing or storage areas. The cover may also be arranged to assist with fine adjustment to enable the connections to be made between the processing head manifold and the supply manifold.

According to a further aspect method of connecting a processing head having a processing head manifold to a support structure having a supply manifold, the processing head being arranged to deliver at least one of an energy source and a media through the processing head for additive manufacturing or inspection, the method comprising:
a) inserting the processing-head into a clamping mechanism of the support structure;
b) engaging an engagement portion of the support structure with a corresponding engagement portion of the processing head in an initial motion; and
c) after engaging the engagement portions, moving the processing head manifold into connection with the supply manifold in an additional motion;
d) wherein connection of the supply manifold and the processing head manifold provides a supply of one or more media and/or energy to the processing-head such that, in use, the or each media and/or energy can be supplied.

It will be appreciated that moving the processing head manifold into connection with the supply manifold is an additional motion. Those skilled in the art will appreciate that the sequence of the various stages of docking and clamping can be varied as desired.

The engagement of the engagement portions may provide a mechanical interface.

An additional movement may be actuated by an energy supply.

The supply manifold and the processing head manifold may be connected in a multistage docking procedure.

The additional movement may comprise a fine movement of the processing head manifold relative to the supply head manifold.

One of the supply manifold and the processing head manifold may comprise a cover for avoiding contamination of the or each manifold. The cover may be opened or removed while the manifolds are fully coupled.

The connector may comprise an electrical connector, gas connector, or a water connector.

The skilled person will appreciate that this aspect of the invention may be used in respect of any interface docking system but that it is of particular application in a machine tool or robot which is adapted to carry out both additive manufacturing and CNC machining on a workpiece or inspection of the workpiece.

As discussed above, "multi-stage docking" allows the use of connectors that require alignment with greater precision than the positioning of the manifold interfaces using a simple engagement mechanism. Once the initial mechanical interface between the engagement portions has been established, additional stages can be actuated by any convenient energy supply including but not limited to pneumatic or electrical actuation.

Additional steps or "multi-stage docking" allows the use of connectors that require alignment with greater precision than the positioning of the manifold interfaces using the anti-rotation arm or other convenient alignment method such as a robot or gantry. Examples of such connectors that would benefit by this approach include electrical connectors or water fittings, particularly water fittings that de-couple or gas connectors. Multistage docking may also accommodate the moving or removal of a protective covering that keeps chips, swarf, oil, cutting fluid and other contaminants away from compromising the manifold connectors, such as electrical interfaces for example. In alternative embodiments such as for use with a robotic arm, it may be desirable to have multiple stages such that portions of the manifolds engage at different times or sequences. This multi-stage docking can serve to significantly reduce the stiffness requirements of a machine tool, robotic arm, gantry, printer or the like used as support since the engagement forces of multiple connectors do not all need to be overcome to achieve engagement of the supply and processing head manifolds. In single stage docking processes the forces applied to the support or robotic arm may be substantial and increase rigidity requirements for the support or robotic arm significantly above that which may be needed for moving the processing head relative to the workpiece. Further during docking an increased load may be applied to the support or robotic arm due the movement of the processing head relative to the supply manifold and the forces involved in the docking process. This increased stiffness and force requirement in order to withstand single stage docking can increase the cost of the support or robotic arm significantly.

In some circumstances it may be desirable to utilise connectors which are more delicate or sensitive to forces or positional accuracy than other interfaces which have been commonly used. Desirably a final connection may be made by means of later stages of docking when the position of the interface is broadly aligned by the first stage and later or final connections may be by means of some fine adjustments. One implementation of this is to have a rough alignment between engagement portions in a clamping mechanism such there is rough engagement. Once an initial engagement is complete, the clamping mechanism may be actuated in an additional motion such that moves the supply manifold into better alignment with the processing head manifold. Typically the initial docking may move a portion of the head and supply manifolds into rough engagement often on the order of 1 to 20mm. Typically the additional docking motion moves a portion the supply or processing head manifold a distance that is in the order of less than 1mm and often is down to only a few up to 25 microns. Once the higher precision alignment is complete, then water fittings or other connectors that may be damaged by misalignment or lateral forces potentially present during the initial clamp engagement can be moved into fluid communication with one another. Such fittings or connectors may then have a final engagement stroke on the order of 5-15mm with axial alignment having been satisfied.

In another embodiment a rough alignment may be achieved by the use of tapered pins on one of the supply and processing head manifolds which engage and cooperate with apertures in the other of the supply and processing head manifolds, and which are arranged to guide the supply and processing manifolds into higher precision alignment as the engagement of the tapered pins in the apertures increases. It will be appreciated that the lead in angle on the pins may oblige a relatively long engagement distance. When pins are left shorter connectors which may protrude from the manifold interface may be damaged by misalignment before the engagement of the less or non-tapered portion of the pin achieves sufficient alignment accuracy for said connectors.

Use of the disclosed multistage docking allows these problems to be overcome. In some embodiments an initial clamping mechanism may comprise a pin that in some cases may be tapered. It may be desirable to locate the connectors within one of the supply manifold or processing head manifold. In some preferred embodiments the connectors may be entirely retracted within the supply or processing head manifold during the initial clamping movement. Engagement of the pin in the aperture comprises the initial clamping movement. An additional fine adjustment movement results as the pin travels down the aperture and the lead in angle on the pin or pins brings the supply and processing head manifolds into more accurate alignment. Once the accurate alignment has been achieved the connectors may be moved to an engagement positon. In this embodiment the additional movement is in the same directions as the initial clamping movement.

In another embodiment a lug on one of the manifolds may be arranged to engage with an aperture on the other of the manifolds. Initial clamping movement may be in a first direction. Additional movement may be in a direction transvers to the first movement. Once the additional movement has been completed the connectors may be moved into engagement and fluid communication.

It will be appreciated that the support may be part of a machine tool or part of a robot. It is believed that application to a robot system is of particular utility as one of the advantages of the multistage docking is the reduction in the load and forces applied in the initial clamping motion and this may be of particular application to robots and to light duty CNC machines. The skilled person will appreciate that robotic systems may not have the required stiffness, strength and accuracy to achieve docking in a single action.

The skilled person will appreciate the above aspects of the invention introduce various features and will further appreciate that the features from one aspect of the invention are applicable, mutatis mutandis, to other aspects.

### Brief description of the drawings

There now follows, by way of example only, a detailed description of an embodiment of the invention of which:
**Figure** 1 is a schematic illustration of a machine tool;
**Figure** 2 schematically shows a section through a prior art machine tool and docking head;
**Figure 3a** is a schematic illustration of a prior art processing head before connection to machine tool;
**Figure 3b** is a schematic illustration of a prior art processing head after connection to machine tool;
**Figure 4** is a schematic illustration of a prior art stop block and processing head with an anti-rotation arm and plunger; shows further detail of a manifold used in an embodiment of the invention;
**Figure 5** shows a view of an alternative processing head before connection of the processing head to a machine tool ;
**Figure 6** shows a view of the embodiment of Figure 7 after connection of the processing head to the machine tool; perspective view of the embodiment of Figure 5 illustrating media supplies thereof;
**Figure 7** is a schematic illustration of a processing head having a number of media supplies;
**Figure 8** is an illustration of an alternative processing head in accordance with another aspect of the invention attached to a machine tool;
**Figure 9** is an illustration of a further embodiment of a processing head;
**Figure 10** is an illustration of a further embodiment of a processing head;
**Figure 11a** is a perspective illustration of an embodiment of a processing head incorporating a cover;
**Figure 11b** is a side view of the embodiment of the Figure 11a;
**Figure 12** is an illustration of an embodiment in accordance with a further aspect of the invention, and
**Figure 13** is an illustration of another embodiment is accordance with the further aspect of the invention.
**Figure 14a and 14b** are an illustration of prior art connections;
**Figures 15a to 15d** illustrate the connection steps in accordance with another aspect of the invention;
**Figures 16a to 16d** illustrate the steps of an alternative embodiment of the invention.

### Detailed description of the drawings

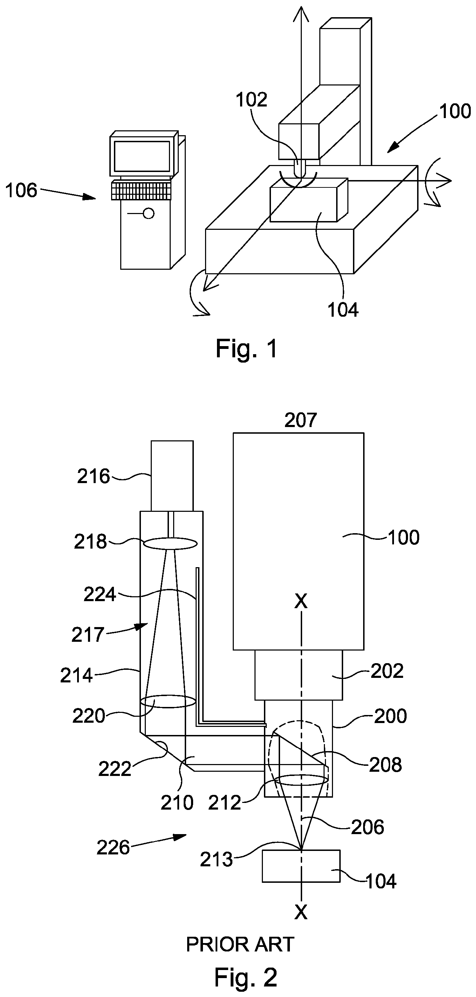

Figure 1 shows, schematically, a machine-tool 100, which typically comprises a machining head 102 held in a clamping mechanism of the machine-tool 100 and arranged to machine a work-piece 104. Further, the machine-tool 100 is usually controlled by a controller 106 which controls the position of the machining-head 102 as it processes the work-piece 104.

Most machine-tools 100 are arranged such that the machining-head 102 can be interchanged with other machining-heads 102 in order that the correct machining-head 102 is provided for the task at hand. Providing the example of milling machine, then a first machining-head may be provided for coarse material removal, whereas a second machining-head may be provided for fine material removal.

As such, machine-tools 100 have tool-changers which can, typically under the control of the controller 106, change the machining head 102 being used by the machine-tool 100 to process the work-piece 104.

Figure 2 illustrates a prior art processing-head 200 disclosed in the inventors earlier application WO2014/013247 which connects to the machine-tool 100 using the clamping mechanism 202 of the machine-tool 100 and which can be stored in a store of machining-heads and automatically connected to the machine-tool 100 with a tool-changer thereof. Here the tool-changer may provide a storage-location for processing-heads, machining-heads, etc. which are not currently being used by the machine-tool. Discussion herein refers to a clamping-mechanism 202 and it is assumed that a spindle into which the clamping mechanism 202 connects is part of the machine-tool 100.

In the embodiment described, the processing head 200 is arranged to focus a laser beam 206 onto the work-piece 104. In other embodiments, other energy sources may be utilised instead of the laser.

In Figure 2, a section is shown through the processing-head 200 and it can be seen that a reflector, such as a mirror 208, arranged to move an incoming laser beam 210 through ninety degrees to be incident upon a focussing-lens 212 for creation of the focussed-laser beam 206. In addition to the laser beam and optical components, the processing-head 200 also contains one or more ducts to deliver a media. For the example, the media may comprise a polymer and/or metallic powder within a transport fluid which is arranged to be melted by the energy source. The processing head is arranged such that media is delivered through the processing-head and is passed into the energy source such that it is molten or at least semi-molten before the media reaches the work-piece 104. As such, the processing-head can be used to deposit material onto the work-piece and provide a deposition system, which may for example be used to repair parts.

The machine tool (including a spindle) and the clamping-mechanism 202 have a longitudinal axis, represented by the dashed line XX in Figure 2. Should a machining-head (such as a milling cutter) be present within the clamping-mechanism 202 then it would rotate about the axis XX. Conveniently, the energy source, which in the embodiment being described is the laser-beam 206, is focused onto a point, area, etc. 213 that lies substantially upon the axis XX on the surface of the work-piece 106.

Adjacent to the processing head 200 and clamping-mechanism 202 there is provided a supply-unit 214 which provides a housing in which various components are housed. The processing-head 200 comprises a processing-head docking-manifold 201 and the supply-unit 214 comprises a supply docking-manifold 300, which are arranged to mate with one another to connect the supply-unit 214 to the processing-head 200 in the condition as shown in Figure 2.

On top of the supply-unit 214 there is provided an energy source 216, which in the embodiment being described is a laser. The laser 216 generates a beam which is transmitted into the supply-unit 214 and passes through a beam expander 217 comprising a first and a second lens 218, 220 respectively. The beam expander 217 is utilised to increase the diameter of the laser beam in order to achieve a better final focus onto the work-piece 104 and reduce the thermal load on the optics.

The supply-unit 214 also comprises a further reflector 222 arranged to reflect the beam of light from the laser through 90° toward the processing head 200 and the reflector 208 therewithin. Each of the lenses 218, 220 and reflector 222 may be thought of as being guiding mechanism provided within the supply-unit 214.

The supply-unit 214 also comprises a supply of various media 224 which connects through the manifold to the processing-head 200 when the supply-unit 214 is connected thereto.

The skilled person will appreciate that supply unit 214 comprises a complex component having a high cost and typically being a relatively large and cumbersome component.

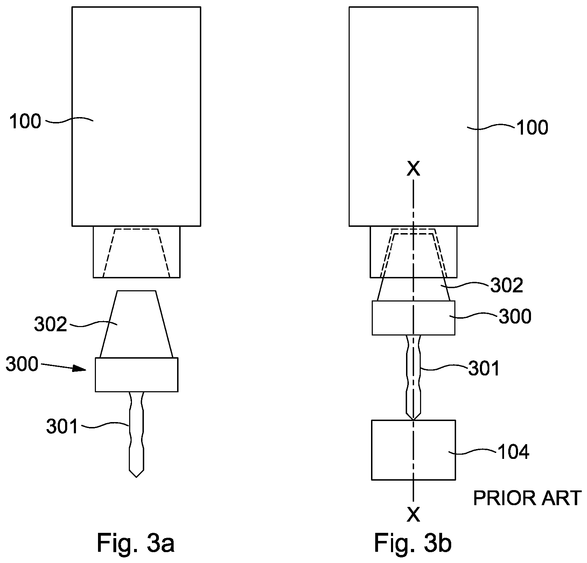

Figure 3a is a schematic illustration of an alternative prior art processing head and machine tool in which the processing head 300 having a processing component 301 and a clamping component 302 arranged to clamp to a machine tool 100. In Figure 3a the processing head is not connected to the machine tool.

Figure 3b is a schematic illustration of the machine tool and processing head of Figure 3a once the processing head 300 has been clamped to the machine tool by the clamping component 302. The processing component 301 may then be deployed to operate on a work piece 104.

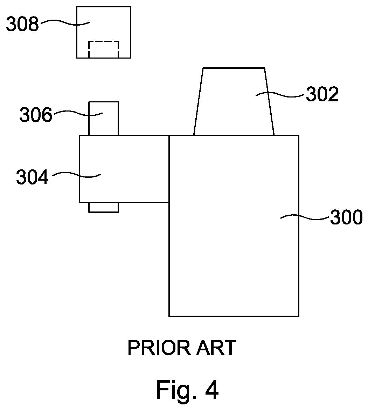

Figure 4 shows a schematic illustration of a prior art anti-rotation arm and stop block. The processing head 300 has clamping mechanism 302 arranged to clamp onto a spindle of a machine tool. The processing head 300 further has an anti-rotation arm 304 connected to the processing head. The anti-rotation arm 304 has a plunger 306 which is arranged to releasably connect to a stop block 308 which is connected (not shown) to the machine tool. The anti-rotation arm and the stop block are arranged such that the processing head does not rotate with the spindle.

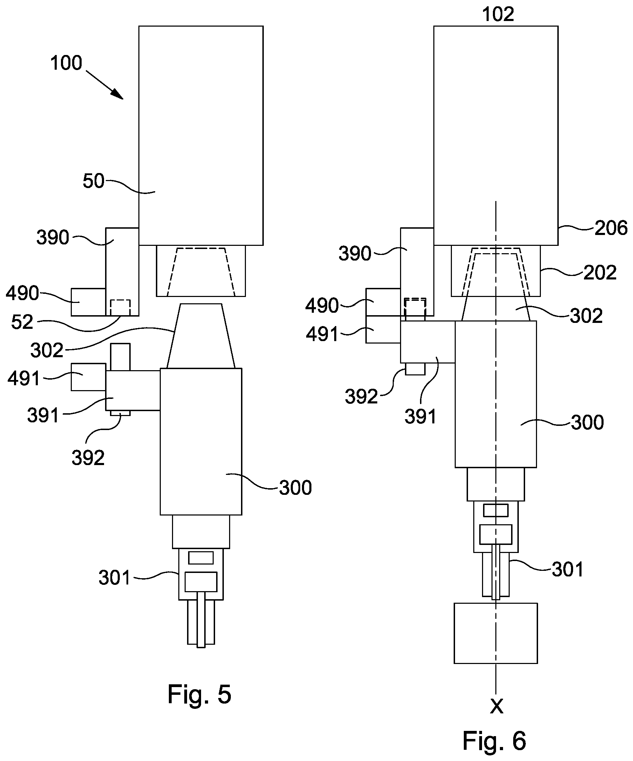

Figure 5 is a machine tool 100 in accordance with the invention in an undocked condition and comprises a machine tool body 50 and a processing head 300. The machine tool body 50 has a stop block 390 attached to the body 50. The stop block comprises an aperture 52.

The processing head 300 comprises a processing component generally indicated at 301 and a clamping component 302. The clamping component is arranged to be releasably clamped by the machine tool as is illustrated in Figure 6. The processing head further comprises an anti-rotation arm 391 on which a plunger 392 is mounted. The plunger 392 is arranged to be releasably received in the aperture 52 in the stop block on the machine tool body 50.

The stop block further comprises a supply manifold 490 mounted on a side of the stop block adjacent the plunger. The processing head further comprises a dockable manifold 491 provided on a side of the anti-rotation arm adjacent the plunger and arranged to be able to dock with the supply manifold 490 on the stop block. Figure 6 illustrates the processing head clamped in position on the machine tool and with the anti-rotation arm and plunger engaged with the stop block and the supply and processing head manifolds docked together.

It will be appreciated that the skilled person is able to arrange for fluid and media to be supplied to the supply manifold and from the processing head manifold to the processing component of the processing head.

In operation, the processing head is connected to the machine tool 100 using a tool changer or other mechanism, under control of the controller. The tool changer is controlled to move the clamping component 302 of the processing head into a clamping mechanism in the nose of the spindle.

In one example embodiment, the movement of the clamping component 302 into engagement with the machine tool 100 also places the plunger 392 into engagement with the aperture 52 in the stop block 390 and the supply manifold 490 of the stop block 390 into communication with the dockable manifold 491 of the processing head.

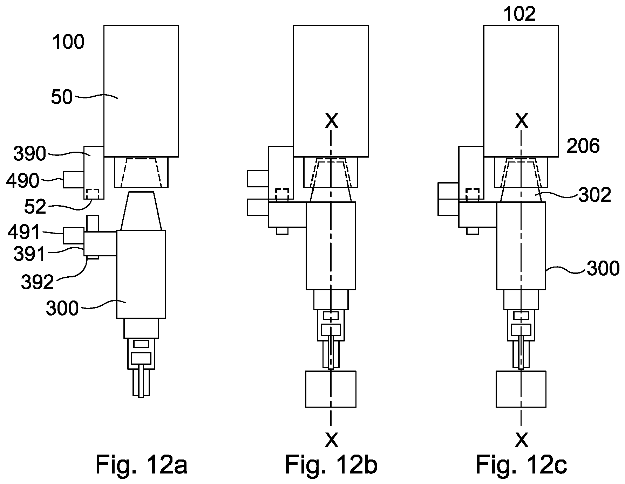

In an alternative embodiment, illustrated in Figure 12, a first docking step connects the clamping components 302 and the machine tool, and establishes an initial coarse fit between the plunger 392 and the aperture as can be seen in Figure 12b. The manifolds 490, 491 are then brought into fluid communication in a second docking step. The second docking step may be actuated by convenient energy supply including but not limited to pneumatic or electrical actuation. The second docking step is completed in Figure 12c and the manifolds 490 and 491 are more closely aligned and connected.

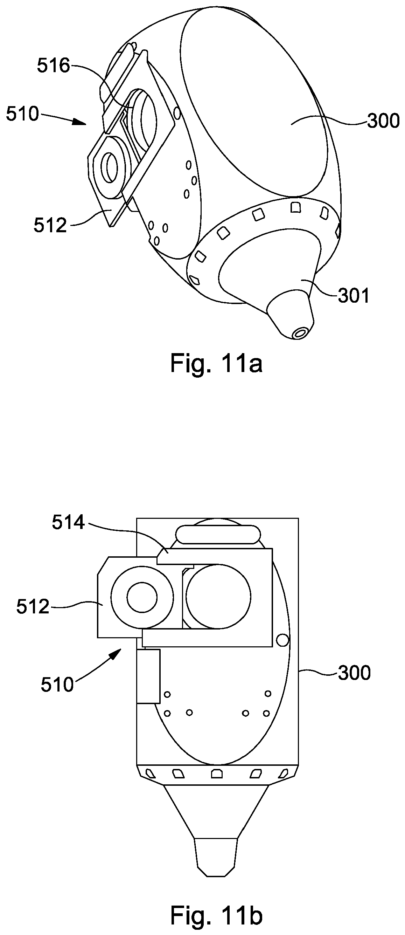

One or both of the docking manifolds 490, 491 may include a cover 510 to protect the manifold against ingress into the manifolds 490, 491 when they are not connected. The cover may comprise a closure 512 moveable in a track 514 to close the opening 516 into the processing head. Alternative means of providing a closure may be readily envisaged by the skilled person. The second docking step may also actuate removal of the covers. Alternative, a further step of removing the covers may be provided. A processing head with a cover is illustrated in Figure 11.

The plunger 392 and aperture 52 provide a convenient coarse position means. It will be appreciated that multi-stage docking can be used with any docking manifolds having a coarse positioning means, and is not limited to stop blocks.

Further it will be appreciated that although in the embodiment described the docking manifold 491 of the processing head moves to engage with the supply manifold 490 after the alignment/engagement of clamping component 302 to clamping mechanism 202 and the plunger 392 to the stop block 390. It will be appreciated that the sequence may be varied as desired. It will further be appreciated that in some embodiments it is convenient to move the supply manifold 490 rather than the processing head manifold 491.

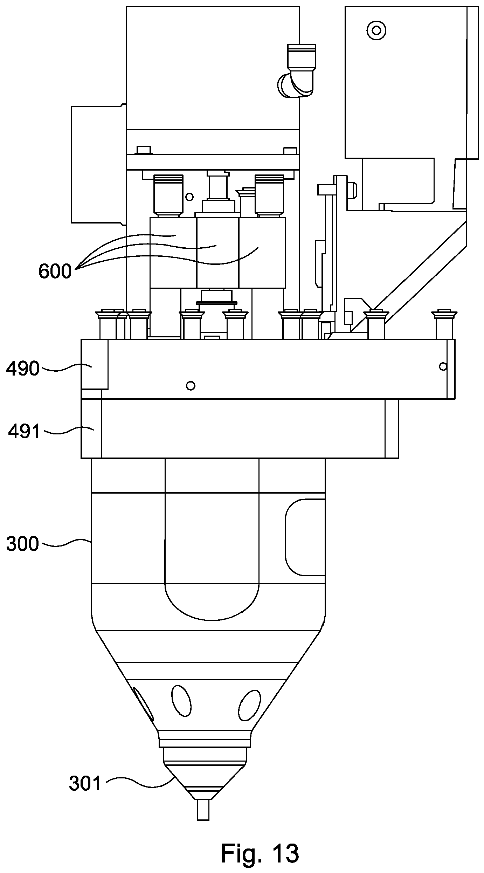

In another embodiment illustrated in Figure 13 the first docking step comprises an alignment of the processing head manifold 491 and the supply head manifold 490 which may be by movement of the processing head manifold 491 towards the supply head manifold 490 or vice versa. Once the manifolds are connected an additional docking movement brings the connectors 600, in this case located broadly within the supply manifold into connection with corresponding connector elements in the processing head manifold. The additional docking movement may be effected by pneumatic or electrical control.

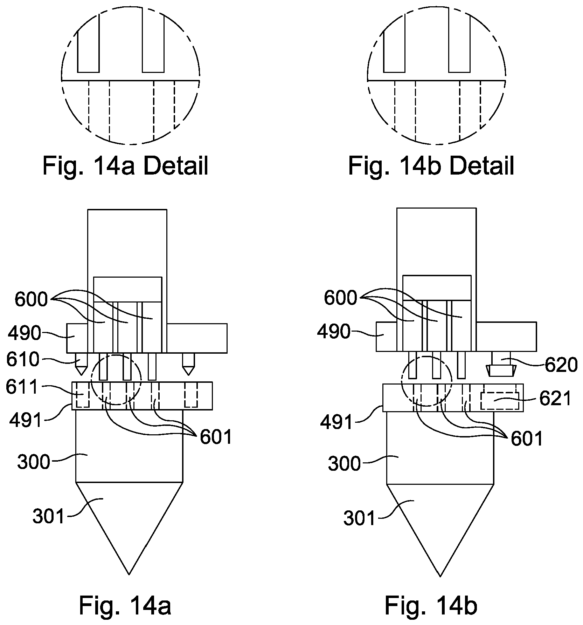

Figure 14a shows an embodiment of known docking systems wherein a tapered element such as a tapered pin 610 on the supply manifold is utilised in the first clamping movement to align the docking supply and processing head manifolds when it engages into the corresponding aperture 611 on the processing head manifold. In previously known arrangements a convenient length of pin may not exceed a length of the connectors or may not engage with sufficient accuracy of alignment quickly enough to avoid a collision of the connectors 600 into the manifold is shown in Fig 14a detail.

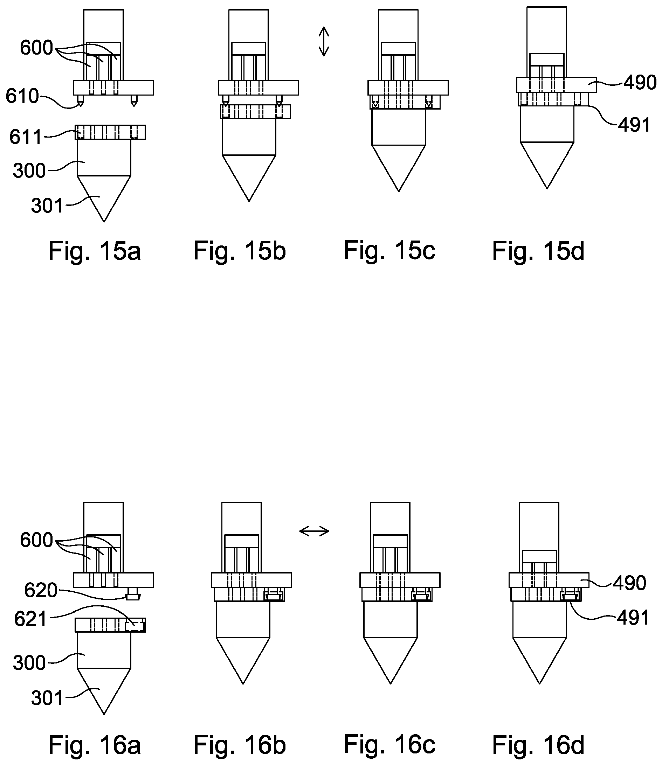

In a method in accordance with the invention in which multi-stage docking is utilised and as illustrated in in Fig 15a to 15d the connectors 600 are kept retracted within the supply manifold until the tapered pin 610 enters into coarse alignment as is illustrated in Fig 15c. The supply and processing head manifolds proceeds to a higher precision alignment as the lead in angle of the pins moves into the aperture and as the additional movement is carried out. Full alignment is achieved once the additional movement has been completed and as shown in Fig 15d. Then the connectors 600 may be fully engaged and in fluid communication with corresponding connectors 601 in the processing head manifold and a final movement and engagement may be carried out to couple the connectors.

Figure 14b shows an alternative embodiment where the alignment is achieved using a clamping mechanism lug 620 that engages with a corresponding aperture 621. This allows the clamp to be partially engaged using a coarse alignment as shown in Fig 14b. It will be appreciated that as illustrated in the detail of Figure 14b that the connectors may not be fully aligned between the processing head manifold and the supply manifold and that damage may occur under the clamping movement.

In accordance with the multistage docking process illustrated in Figures 16a to 16d the lug 620 is engaged in the aperture 621. Once the initial clamping motion has been actuated and the processing head manifold and supply manifold are coarsely engaged then the additional movement actuated to align the manifolds with higher precision as shown in Fig 16c. In this embodiment the additional movement is transverse to the initial clamping movement. Once aligned and clamped as shown in Fig 16d additional engagement of connectors 600 can be carried out without the risk of damage. The multistage docking also allows for the support structure to position the processing head manifold and the supply manifold relative to one another in a coarse way with very little if any force in preparation for engagement of higher force connectors once clamped.

Use of multistage docking may be particularly desirable in cases where the connectors are more delicate such as electrical or gas connectors or water connectors. It will also be appreciated that the use of multistage docking may be of particular advantage in relation to robotic systems or to light duty CNC machines which may not have the necessary strength and stiffness to be able to achieve docking in a single motion without risking delicate connectors.

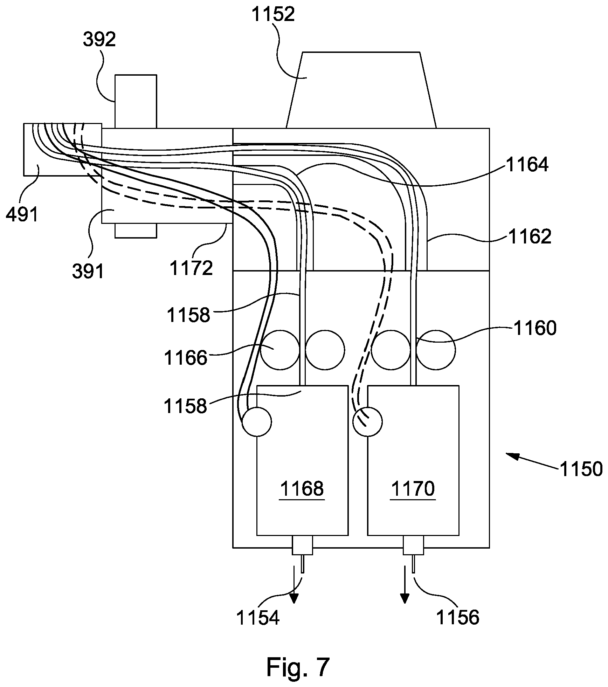

Figure 7 shows a material processing head arranged to extrude heated polymer with power and media supplied external to the processing head, perhaps through a manifold as described above. In this embodiment the processing head 1150 comprises a clamping mechanism 1152 and a first deposition head 1154 and a second deposition head 1156. The clamping mechanism, which is sometimes referred to as a tool holder, may be an ISO-40 taper or HSK 63a or other suitable tool holder style as is known in the art.

The processing head is one example representing "material extrusion" devices as defined by the ASTM F2792 standard. Thus, the deposition heads 1150 is arranged to extrude material to a work piece. The processing head also comprises a first and a second media supply 1158 and 1160. In this embodiment the media supply comprises a first channel and a second channel 1162 and 1164 each arranged to guide a first and a second filament of polymer forming the media providing the media supplies 1168, 1170. A media is supplied to the first and second channels from a media supply mechanism. The media supply mechanism is arranged to connect to a manifold. A power supply is also provided to the processing head from the manifold, similar mutatis mutandis to the manifold described in earlier figures. A filament feeding mechanism 1166 is located in the processing head and feeds the first and second filament to respective first 1168 and second 1170 heated chambers. The power supply (typically connected via a manifold and the connection is shown here at 1172) supplies energy to first and second heating chambers and within the respective chambers the first and second filaments are heated and a semi liquid media is supplied to the first 1154 and second deposition head 1156.

It will be appreciated that the tool holder configurations of the machined tool include standard tools and sizes such as ISO40, CAT40, BT40, HSK63A, Capto 6 etc. In addition the configurations and sizes that fall within the scope of the disclosed invention include other sizes and configurations and adapter plates for end effectors of robots.

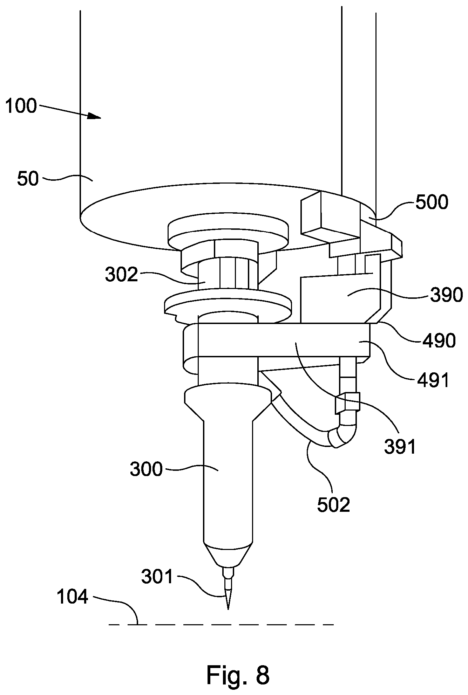

Another example of a machine tool in accordance with the invention is illustrated in Figure 8.

Figure 8 is a machine tool 100 in accordance with the invention in a docked condition and comprises a machine tool body 50 and a processing head 300. The machine tool body 50 has a stop block 390 attached to the body 50.

The processing head 300 comprises a processing component generally indicated at 301 and a clamping component 302. The clamping component is arranged to be releasably clamped by the machine tool. The processing head further comprises an anti-rotation arm 391 on which a plunger is mounted but is not visible in Figure 8.

The stop block 390 further comprises a supply manifold 490 mounted on a side of the stop block adjacent the plunger. A media supply 500 is connected to the supply manifold 490. The processing head also comprises a dockable manifold 491 mounted on the anti-rotation arm adjacent the plunger and arranged to be able to dock with the supply manifold 490 on the stop block. Figure 8 illustrates the processing head clamped in position on the machine tool and with the anti-rotation arm and plunger engaged with the stop block and the supply and processing head manifolds docked together.

In this embodiment the media supply to the processing head passes through the anti-rotation arm and through ducting 502 into the processing head and thence through the processing head to the processing component.

It will also be appreciated that the media and/or energy supply may be provided through the docking interface and the anti-rotation arm. Alternatively the docking interface may be through the plunger. Alternatively the energy and media delivery may be arranged through an independent area, preferably adjacent to the stop block and anti-rotation arm. The media supply may in some part pass through ducting provided between the anti-rotation arm and the processing head.

It will be appreciated that use of the stop block connection to support docking manifolds provides an improved arrangement which is particularly suited for supplying lighter media and less sensitive energy sources to the processing head.

An example of the use of the machine tool in accordance with the invention is to provide a machine tool arranged to deposit plastics material on a workpiece. The plastics media can be supplied to the processing head in the form of an extruded filament or granules through the docking manifolds as described earlier and then through the ducting 502 into the processing head 300. The plastics material is heated in the processing head and is then deposited through the processing component 301 onto the workpiece 104.

The arrangement is advantageous in using less complex components and occupying a smaller space around the machine tool so increasing the flexibility.

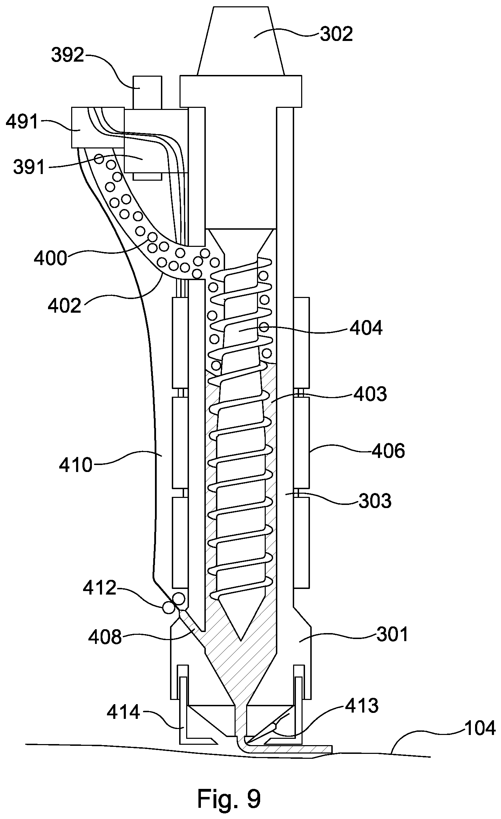

A further embodiment of a processing head in accordance with an aspect of the invention is illustrated in Figure 9. The processing head 300 comprises a body portion 303 intermediate the clamping component 302 and the application component 301. An anti-rotation arm 391 is connected to an upper part of the body portion adjacent the clamping component. A docking manifold 491 is connected to the anti-rotation arm 391. The docking manifold in this embodiment is arranged to dock with and conduct an energy supply and a media supply to the processing head for application of material to a workpiece 104.

In this example the energy supply is electrical energy and the supply is routed through the manifold and the anti-rotation arm before entering into the processing head. The electrical energy is used to heat the media to be applied to the workpiece. Mechanical motion is also provided by the rotation of the spindle which turns the clamping component 302 which in turn rotates the screw inside the body of the head. Heating zones 406 are provided around the body of the processing head to heat the media.

Media to be applied to the workpiece is also supplied to the processing head through the manifold. The media may be selected from a range of suitable media. In this case the media comprises plastics pellets 400. From the manifold the plastics pellets 400 are directed through ducting 402 between the manifold and the processing head. The ducting communicates with an internal chamber 403 in the body of the processing head. An Archimedes screw 404 is provided to move the media continuously towards the application component. As the media passes down the body the media is heated by the electrical energy in the heating zones until the plastics pellets are completely melted 408 and ready to be applied to the work piece by the application component. An additional media in the form of a wire, fiber or filament 410 is supplied to the processing head from the manifold. The wire 410 passes from the manifold to rollers 412 on the application component of the processing head and is applied to the workpiece. As needed it may be convenient to cut the wire, fiber or filament using a blade 413 or other cutting apparatus known in the art to provide discrete lengths during deposition or for finishing purposes. A blade 413 is provided that operates to cut the fiber periodically once it has been extruded. The knife can cut the fibre when it is finished with each continuous feed. In other embodiments the fibre is chopped periodically to produce a chopped fibre reinforcement of the extruded material.

Furthermore a compacting frame or tamping foot 414 is provided to compact the newly deposited material to achieve smoother and higher density deposition. It is desirable to cool this foot to minimize adhesion of deposited material onto it. The foot may also vibrate or reciprocate against the deposited material.

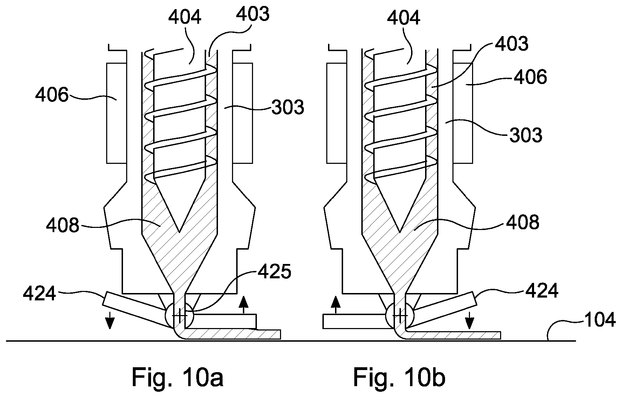

Another embodiment of a compacting or tamping feature is shown in Figure 10 which shows a cross-section through a head with a moveable platen 424. The platen has a first portion extending behind the material being deposited and a second portion, at a non-parallel angle to the first portion, extending ahead of the being deposited. The paten 424 rotates or rocks back and forth to provide compaction to the deposited material as it changes from position a to position b. The axis of rotation 425 may be perpendicular to the feed direction (as illustrated) or may take alternative alignments including random alignments.

In the examples discussed above, the stop block 390 is attached to the side of the body 50 of the machine tool 50. However, it will be appreciated that this is by way of example only. The stop block 390 may be connected to or integrated in other parts of the machine tool. For example, the stop block 390 may be integrated into the machine's spindle, spindle housing, Z-axis casting or other structure. The stop block 390 should be connected to or integrated with a stationary part of the machine tool, such that when an appropriately arranged anti-rotation arm 391 engages the stop block, to prevent rotation of the processing head.

In the examples discussed above, the processing head 300 has a single anti-rotation arm 391. However, in an alternative embodiment, the processing head 300 may include two anti-rotation arms 391, spaced by 180 degrees around the processing head 300. Each arm may incorporate a plunger or other connector to engage the stop block 390. The provision of two arms provides for multiple connecters, to improve alignment between the processing head 300 and machine tool. The stop block 390 may extend around the machine tool such that both arms engage the same stop block 390. Alternatively, separate stop blocks 390 may be provided around the machine tool. One or both of the stop blocks 390 and anti-rotation arms 391 may include supply manifolds, and/or may supply energy, as discussed above. The anti-rotation arms 391 may be provided at any spacing around the processing head. Furthermore, any number of anti-rotation arms 391 and stop blocks 390 may be provided.

## Claims

1. A docking interface between a processing head and a support structure, wherein the docking interface is arranged to deliver at least one of an energy source and a media through the processing head for additive manufacturing or inspection,
wherein the support structure includes:
a supply manifold arranged to deliver at least one of the energy and media;
a clamping mechanism arranged to receive the processing-head; and
a first engagement portion;
wherein the processing head is received in the clamping mechanism and includes:
a processing head manifold arranged to receive at least one of the energy and media from the supply manifold; and
a second engagement portion arranged to releasably engage the first engagement portion, and
wherein an initial motion aligns the first engagement portion and the second engagement portion, and an additional motion enables communication between the supply manifold and the processing head manifold.

2. A docking interface in accordance with claim 1 wherein a cover for avoiding contamination of the or each manifold is opened or removed while the manifolds are fully coupled.

3. A docking interface in accordance with claim 1 or claim 2 wherein the support structure is a machine tool or a robot or a combination of the two and the processing head is arranged to carry out at least one of additive manufacturing or Computer Numerically Controlled (CNC) machining or inspection on a workpiece.

4. A docking interface in accordance with any preceding claim, wherein the communication is through at least one connector, optionally wherein the connector comprises an electrical connector, media guide, gas connector, or a fluid connector.

5. A docking interface in accordance with any preceding claim wherein the additional movement is actuated by an energy supply.

6. A docking interface in accordance with any preceding claim wherein the supply manifold and the processing head manifold are connected in a multistage docking procedure.

7. A docking interface in accordance with any preceding claim wherein the additional movement comprises a fine movement of the processing head manifold relative to the supply head manifold.

8. A docking interface in accordance with any preceding claim, wherein the additional motion is in a direction transverse to the direction of movement of the initial motion.

9. A method of connecting a processing head having a processing head manifold to a support structure having a supply manifold, the processing head being arranged to deliver at least one of an energy source and a media through the processing head for additive manufacturing or inspection, wherein the method comprises:
a) inserting the processing-head into a clamping mechanism of the support structure;
b) engaging an engagement portion of the support structure with a corresponding engagement portion of the processing head in an initial motion; and
c) after engaging the engagement portions, moving the processing head manifold into connection with the supply manifold in an additional motion;
d) wherein connection of the supply manifold and the processing head manifold provides a supply of one or more media and/or energy to the processing-head such that, in use, the or each media and/or energy can be supplied.

10. A method of connecting a processing head having a processing head manifold to a support structure having a supply manifold in accordance with claim 9 wherein the engagement of the engagement portions provides a mechanical interface.

11. A method in accordance with claim 9 or claim 10 wherein an additional movement is actuated by an energy supply.

12. A method in accordance with any one of claims 9 to **11** wherein the supply manifold and the processing head manifold are connected in a multistage docking procedure.

13. A method in accordance with any one of claims 9 to 12 wherein the additional movement comprises a fine movement of the processing head manifold relative to the supply head manifold.

14. A method in accordance with any one of claims 9 to 13 wherein one of the supply manifold and the processing head manifold comprises a cover for avoiding contamination of the or each manifold and wherein the cover is opened or removed while the manifolds are fully coupled.

15. A method in accordance with any one of claims 9 to 14, wherein the additional motion is in a direction transverse to the direction of movement of the initial motion.
